## Europäisches Patentamt
## European Patent Office
## Office européen des brevets

(11) Publication number: **0 113 336**
**A1**

(12) ## EUROPEAN PATENT APPLICATION

(21) Application number: **84300038.1**

(22) Date of filing: **04.01.84**

(51) Int. Cl.³: **F 16 L 33/00**
**B 29 C 27/24**

(30) Priority: **05.01.83 GB 8300154**

(43) Date of publication of application:
**11.07.84 Bulletin 84/28**

(84) Designated Contracting States:
**DE FR GB IT NL SE**

(71) Applicant: **PRODUCTS & INNOVATIONS LIMITED**
**Unit 40 Elmdon Trading Estate Bickenhill Lane**
**Solihull West Midlands B37 7HE(GB)**

(72) Inventor: **Hill, Henry Rowland**
**3 Herbert Road**
**Solihull West Midlands(GB)**

(74) Representative: **Lewis, Samuel Hewitt et al,**
**FORRESTER & BOEHMERT Widenmayerstrasse 4/I**
**D-8000 München 22(DE)**

(54) **Method of making a sheathed pipe.**

(57) A method of making a sheathed pipe such as a hydraulic brake pipe, comprises the steps of taking an inner pipe part (12) having an outer sheath part (15) thereon, with an end portion (16), of the inner pipe part (12) projecting longitudinally from the end (15a) of the outer sheath part (15), forming a connection part (17) on said end portion (16) of the inner pipe part (12), and providing a sleeve (25) extending over the end of the outer sheath part (15) and the connection part (17).

FIG 1

EP 0 113 336 A1

Title: "Method of making a sheathed pipe"

This invention relates to a method of making a sheathed pipe comprising an inner pipe part and an outer sheath part surrounding, or substantially surrounding, the inner pipe part and more particularly, but not exclusively, to a method of making a hydraulic brake pipe for use in, for example, road vehicles or construction site equipment such as cranes, bulldozers, diggers, trailers and compressors, or agricultural machinery including tractors. However, the invention is not limited to a method of making a sheathed pipe for any particular purpose, but sheathed pipes made in accordance with the invention, have many applications.

One object of the invention is to provide a new and improved method of making a sheathed pipe and another object is to provide a new and improved pipe such as a hydraulic brake pipe.

According to one aspect of the invention, we provide a method of making a sheathed pipe comprising the steps of, taking an inner pipe part having an outer sheath part thereon, with an end portion of the inner pipe part projecting longitudinally beyond an end of the sheath part, forming a connection part on said end portion of the inner pipe part and providing a sleeve extending over the end of the outer sheath part and the connection part.

The method may include the steps of cutting a pre-sheathed length of stock sheathed pipe to a desired length, removing the outer sheath part over an end portion of said length to expose said end portion of the inner pipe part.

Alternatively, the method may include the steps of cutting an unsheathed length of stock inner pipe part to a desired length, providing said connection part on one end of said length, applying an outer sheath part shorter than said length of inner pipe part to a portion of said inner pipe part spaced from said end portion, squeezing the outer sheath part against the inner pipe part and advancing the position of application of squeeze longitudinally of the inner pipe part towards said one end to cause said sheath part to be extended to provided said sheath part up to or adjacent the connection part.

Preferably, a washer or other spacer is provided between said end of the outer sheath part and the connection part, the outer sheath part being extended up to said spacer. For example, the spacer may be received on said end portion of the inner pipe part, prior to providing said connection part and prior to squeezing the outer sheath part so that said end of the outer sheath part after squeezing, abuts or lies closely adjacent the washer or other spacer, which in turn abuts or lies closely adjacent the connection part.

The outer sheath part may be squeezed with a squeezing tool comprising at least one pair of rollers between which the pipe is fed, the maximum distance between the pipe engaging parts of the rollers approximating to the final outer size required of the sheathed pipe.

Means may be provided to maintain the distance between the axes of rotation of the rollers constant during squeezing. For example, the edges of the rollers may engage one another, in which case the pipe-engaging parts of the rollers, intermediate said edges, may provide a cavity to receive the pipe.

The squeezing tool may comprise a hand tool such as a tool having a pliers-like action, but in which the rollers move together and away from one another linearly, i.e. in directions mutually perpendicular to their axes of rotation.

Alternatively, the squeezing tool may be bench mounted having lever means to move the rollers towards one another.

In each case, the rollers may be easily releasably mounted so as to be readily replaceable so that the tools can be used with a wide variety of pipe/outer sheath part sizes.

In each case, the pipe may be provided with a second connection part on an opposite end portion of the inner pipe part and the method may include the further step of providing a second sleeve extending over the opposite end of the outer sheath part and the connection part on said opposite end portion. A spacer such as a washer, may again be provided between the second connection part and the outer sheath part.

The inner pipe part may comprise a metal pipe and the outer sheath part may be made of composite construction comprising an inner lining and an outer synthetic plastics material, with mastic material disposed therebetween.

The inner lining may comprise a perforated material such as a fine mesh material.

The or each sleeve may comprise a natural or synthetic rubber or similar elastomeric material.

- 3 -

0113336

According to another aspect of the invention, we provide a sheathed pipe made according to the method of the first aspect of the invention.

According to a third aspect of the invention, we provide a method of making a hydraulic brake pipe comprising performing a method according to the first aspect of the invention.

The present invention provides a method of making a sheathed pipe which has a high degree of protection for the inner pipe part hence the pipe has a long life, which is of particular importance when the pipe comprises a hydraulic brake pipe where failure of the pipe due to corrosion for example, could prove fatal.

The method may be performed during manufacture of a vehicle to provide "original equipment" brake pipes, or alternatively, may be performed to provide a replacement brake pipe or a full replacement set of brake pipes for a used vehicle.

The invention will now be described by way of example with reference to the accompanying drawings, wherein:-

FIGURE 1 is a cross-sectional view showing an initial stage in the making of a sheathed hydraulic brake pipe embodying the invention;

FIGURES 2 - 5 are similar views to that of Figure 1 but showing successive stages in the method, with a squeezing tool for use in the method in accordance with the invention shown diagramatically in Figures 2 and 3 and a sleeve fixing tool being shown diagramatically in figure 4.

FIGURE 6 is a side section through another sleeve fixing tool for use in the method.

FIGURE 7 is a transverse cross-sectional view taken on the lines 6-6 of Figure 1; and

FIGURE 8 is a side view of a hand sqeezing-tool for use in the method in accordance with the invention.

FIGURE 9 is a side view of a bench mounted squeezing tool.

The invention will now be described, with reference to the drawings, in relation to the replacement of a hydraulic brake pipe on a motor vehicle which has, for example, failed the road worthiness test prescribed by the United Kingdom Ministry of Transport.

A frequent cause of failure of the above referred to test is the unsafe condition of a hydraulic brake pipe or part of a hydraulic brake pipe of the vehicle and it has, hitherto, proved relatively costly to have the pipe or pipes replaced, the system bled and topped up with new hydraulic fluid, the vehicle re-checked. In addition, the time taken to effect the repair is relatively long thus leading to further expense.

By providing a replacement brake pipe or pipes, made by a method in accordance with the invention, the or each pipe is less liable to corrosion damage, or impact damage, making further replacement of the pipe or pipes at a later date, unnecessary.

For replacing brake pipes using the conventional method, a repair shop has in stock appropriate conventional, unsheathed hydraulic pipe, usually in open coil form, a supply of appropriate end fittings to permit lengths of pipe to be joined together and to other components of the braking system, together with a pipe end flaring tool which is used to flare the end of a pipe so that the end of the pipe can be connected to an appropriate one of the above referred to end fittings in conventional manner.

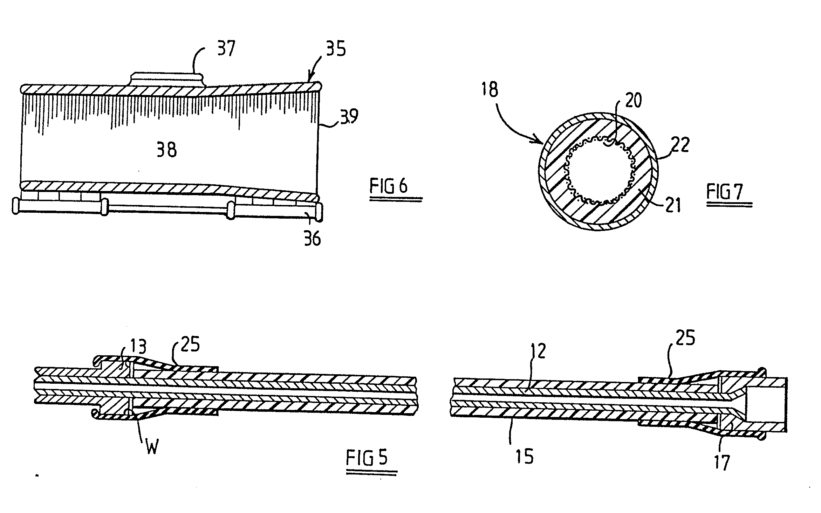

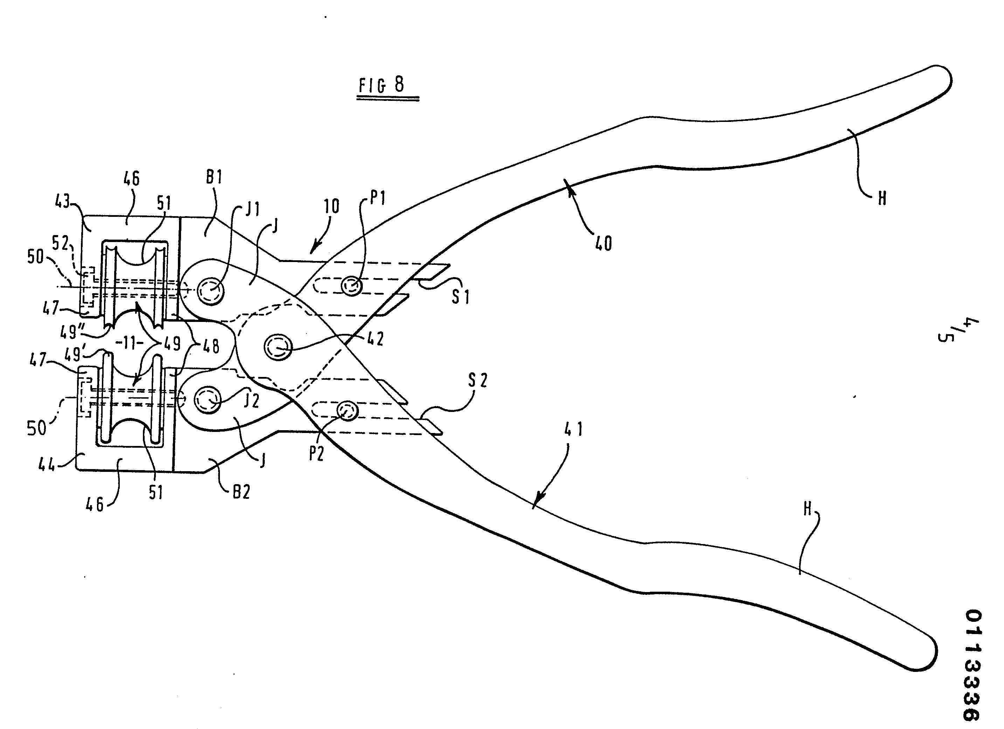

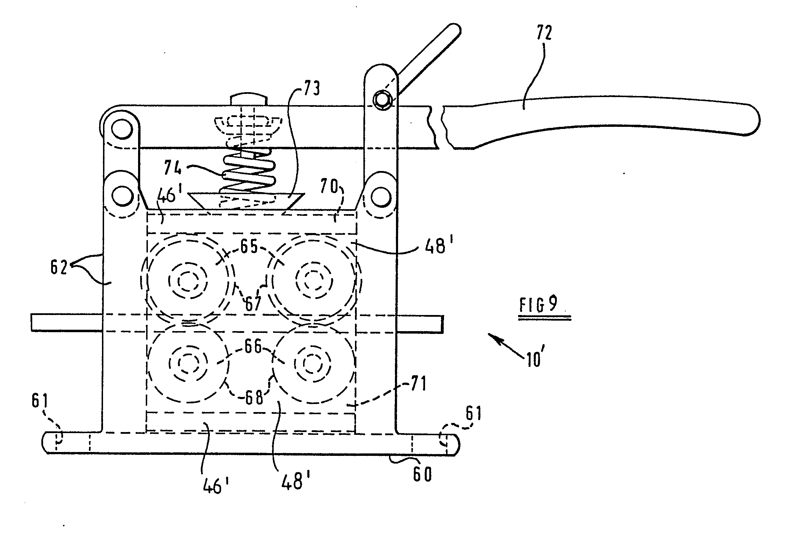

For the method according to the present invention, the only additional material and tools required is a stock of outer sheath part material 15 (see figure 7) which comprises an inner lining 20 made of fine mesh perforated material, an intermediate layer 21 of a mastic substance i.e. a substance which is deformable to a required configuration but which exhibits some elasticity, and an outer layer 22 of a plastics material which has a smooth external surface and is resistant to corrosion in the environment in which the pipe is to be used. Also required are a supply of sleeves 25 (see Figure 5) of natural or synthetic rubber or other elastomeric material, and a supply of securing clips (not shown) for securing the sheathed pipe to a vehicle, as well as a squeezing tool such as hereinafter described in more detail with reference to figures 8 and 9, to be used to fix the outer sheath part to the inner pipe part.

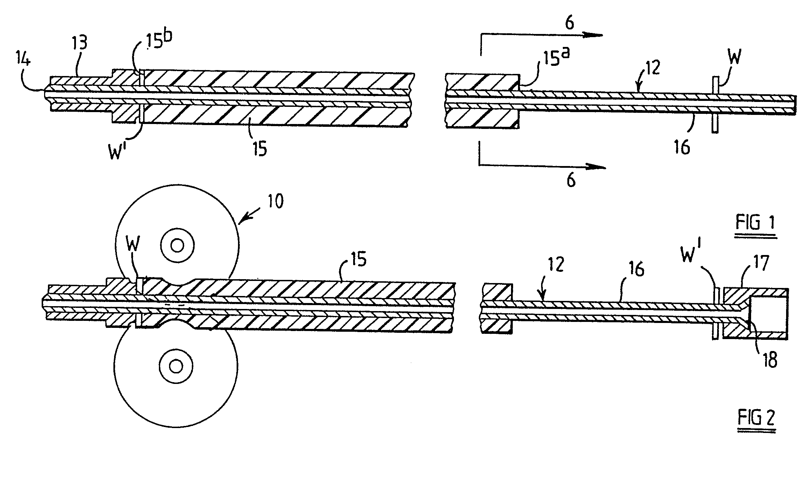

Referring now to Figure 1, an inner pipe part of conventional hydraulic brake pipe stock material is taken and cut to a desired length, to replace the hydraulic brake pipe or part thereof, which has been found to be unsafe. The cut-to-length inner pipe part is indicated at 12 in Figure 1. A male end fitting 13 is applied over one end of the inner pipe part 12 and the pipe is flared in conventional manner as indicated at 14. Hereinafter the male end fitting 13 will be referred to as a second connection part.

A length of outer sheath part stock material 15 is cut to a predetermined length so that after squeezing, as hereinafter to be described, it is elongated so that the end 15a thereof is brought to a desired position. A user of the method would be provided with information enabling him to relate the length to which the outer sheath part stock should be cut for a given length of inner pipe part 12.

Having cut an appropriate length 15 from the outer sheath part stock, a washer W', and then the length 15 are received over the inner pipe part 12 so that an end portion 16 of the inner pipe part 12 projects longitudinally beyond the end 15a of the outer sheathed part length of stock 15. The other end 15b of the outer sheathed part 15 abuts washer W', which in turn abuts the male end fitting 13.

A second washer W is received over the projecting end portion 16, and a female end fitting 17 (see Figure 2) is then positioned at the end of the end portion 16 and the projecting end portion 16 of the inner pipe part 12 is provided with a flared end, as indicated at 18 in Figure 2, in conventional manner using a flaring tool to secure the female end fitting 17 thereto. Hereinafter the female end fitting 17 will be referred to as a first connection part.

A squeezing tool 10 is then operated as hereinafter described with the sheathed stock part 15 at the end adjacent the second connection 13 positioned in a cavity between rollers thereof with the rollers in mutual interengagement.

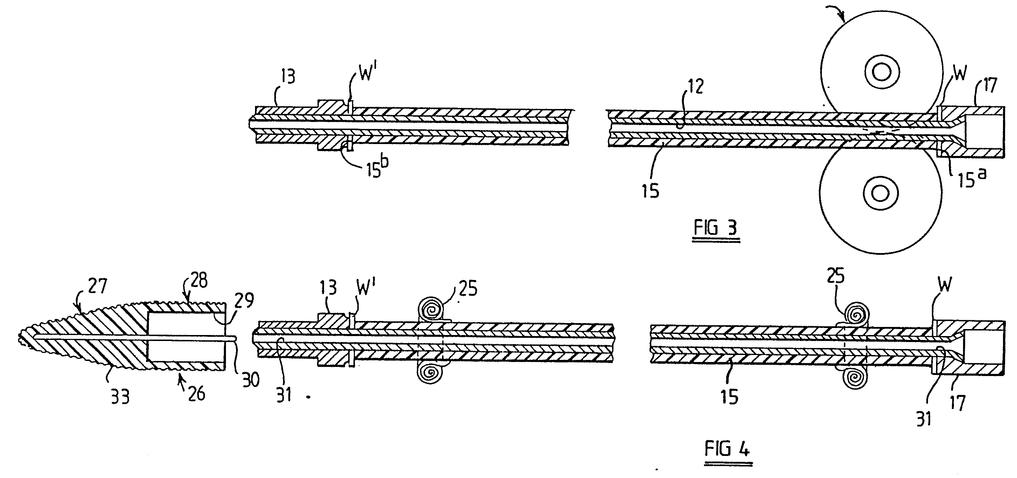

The assembly of inner pipe part 12 and outer sheath part 15 stock is pulled through the squeezing tool, repeatedly if required. As shown in Figure 3, this causes a reduction in the external diameter of the outer sheath part 15 and an extension in the length thereof until the end 15a thereof abuts the washer W, with the washer W in abutment with the first connection part 17.

As a result of the above described squeezing action, the outer sheath part 15 is squeezed onto the inner pipe part 12 and so may be provided with an internal bore of a diameter which is initally a loose fit on the inner pipe part 12 thereby facilitating initial assembly. By thereafter squeezing the outer sheath part 15 with the tool 10, not only is the length of the outer sheath part 15 extended so that the ends 15a 15b thereof abut tightly against the washers W, W' respectively, or at least be closely adjacent the first and second connection parts ,17, 13, but also the mastic substance 21 is forced through the perforations of the inner layer 20 of the sheath part 15 thereby creating a substantially strong adhesion to the surface of the inner pipe part 12 and completely expelling any air from between the inner pipe part 12 and outer sheath part 15 , thereby providing the inner pipe part 12 with a corrosion resistant coating.

If the thus sheathed pipe requires to be bent to a desired configuration to fit the vehicle concerned, it may be bent manually using the rollers of the squeezing tool as a "fulcrum" for bending or using a jig frame with rollers or

- 6 -

0113336

other means to enable the sheathed pipe to be bent.

In the next step of the method embodying the invention, after any such bending to shape as may be necessary, a rubber sleeve 25 in rolled up form is slipped, in appropriate orientation, over each connecting part 13,17, for a few e.g. two centimetres inwardly from the ends 15a,15b of the outer sheath part 15.

If necessary, to facilitate this operation, a sleeve fixing tool such as that shown at 26 may be used. This comprises a tapered nose portion 27 over which the rubber sleeve 25 can be received, and· a straight part 28, the straight part 28 having an internal recess 29 slightly larger than the connecting parts 13, 17, and a central spigot 30 which is in use, received in central aperture 31 of the fitting 13 or 17.

The outside surface of the tapered portion 27 and straight part 28 is provided with ribbing 33 to facilitate the sleeve 25 being rolled over the tool 26 and onto the sheathed pipe.

With the sleeve in place, as shown in Figure 4, the pipe is then offered up into position on the vehicle and the first and second connection parts 17,13,connected to fittings on the ends of pipes or fittings already on the vehicle. Thereafter the sleeves 25 are unrolled over the connection parts 13,17, as shown in Figure 5, and then the new pipe is secured to the vehicle in position using securing clips of appropriate diameter for the sheathed pipe.

If the sleeves 25 are a very tight fit on the outer sheath part 15, if desired, a sleeve fixing tool 35 such as shown in Figure 6 to unroll the sleeve part 25, may be used.

This comprises a two-piece tool, the pieces of which are hinged together by a hinge 36 and snap interengage by means of formations 37 provided on each of the pieces, and together provide an inner recess 38.

At one end 39, the recess 38 is slightly flared.

To unroll the sleeve 25 from the position shown in Figure 4, to the position shown in Figure 5, using the tool 35 the two pieces of the tool 35 are relatively unhinged, and the tool 35 received over the sheathed pipe.

The two pieces are then closed, the formations 37 snap interengaging, and the tool 35 is moved against the sleeve 25 which is received by the flared end 38 of the tool, and the tool 35 is moved longitudinally of the sheathed pipe until the sleeve 25 is entirely unrolled.

Then the tool 35 is removed by again separating the two pieces thereof.

Finally, the brake system is re-charged with hydraulic fluid and bled in conventional manner.

- 7 -

0113336

If the pipe is of relatively long length, the outer sheath part 15 may be initially positioned in the middle of the inner pipe part 12 so that there is an end portion 16 of the inner pipe part 12 projecting from each end of the outer sheath part 15, and then the tool 10 will be engaged with a middle portion of the outer sheath part 15 initially, and would be rolled towards each connection part 13,17, in turn so as to extend the sheath part 15 into abutment with washer W or W' or directly with each connection part 13, 17, so as to achieve the result shown in Figure 4. Thereafter the method would be performed as described above.

A method embodying the present invention may be used to make pipes of a wide range of lengths, for example, from one foot (30.48cm) to upwards of fifteen feet long (457.2cm).

A vehicle hydraulic brake pipe made by a method embodying the present invention has the advantage that due to the sheathing material it is protected, particularly from corrosion, and minor impact damage which can be absorbed by the protective layer. The method may be used for providing new sheathed pipes for new vehicles since new brake pipes can be economically and easily sheathed. Alternatively, the method may be performed to repair existing vehicles as described above since establishments to carry out such repairs can be equipped economically with the necessary equipment and materials for the performance of the method of the present invention.

The method is simple to perform and hence may even, if desired, be carried out on a "do-it-yourself" basis.

Although in the particular case a method of repair of a hydraulic brake pipe for a vehicle has been described above, it should be appreciated that the method can be applied in an exactly analogous manner to provide a sheathed pipes for other purposes in which case the inner pipe part could be made of metal or any other material if desired.

Referring now to Figure 8, one suitable hand tool 10 for use in squeezing the outer sheath part 15 as described above, is shown.

The tool 10 comprises two levers 40 and 41 mutually pivoted at a pivot point 42. At one side of the pivot 42, the levers 40 and 41 comprise hand grips H whereas at the other side of pivot 42, the levers 40 and 41 comprise comprise jaw attachment parts J.

Pivotally attached to the jaw attachment parts J by pivots J1 and J2 are sliding bosses B1 and B2.

Attached to each of the bosses B1 and B2 is a U-shaped roller holding member 43, 44, respectively, each of the roller holding members 43,44, comprising a base 46 with a pair of limbs 47 and 48 extending therefrom.

Between the limbs of each of the U-shaped members, are mounted a pair of rollers 49, only one roller of each pair being visible in the drawings, the axes of rotation 50 of each pair of rollers 49 being coincident in the side view shown in the drawings.

Thus the rollers 49 may rotate relative to the members 43, 44.

Each of the rollers 49 has a U-shaped contour 51 of a diameter corresponding to the final outside diameter of the outer sheath part it is desired to obtain.

For different diameter outer sheath parts 15, rollers having different shaped contours 51 would need to be provided. Thus, the rollers 49 are mounted so as to be easily replaceable i.e. simply removed from the roller holding members 43 and 44, by removal of a pivot pin 52 of each roller of the pair, the pivot pins extending through and between each of the limbs 47 and 48 to support the rollers.

The bosses B1 and B2 each have a slot S1,S2,respectively cut therein in which a pin P1, P2, parallel to pivots 42, J1 and J2 are received. The pins P1,P2, pass through the levers 41,42 and are fixed relative thereto.

It will be appreciated that due to this construction, as the handle grips H of the levers 41 and 42 are moved together, the pins P1 and P2 will move relatively longitudinally of the slots S1 and S2 and that the bosses B1 and B2 will pivot about pivots J1 and J2 so that the rollers 49 will be moved linearly together rather than in an arcuate movement as would occur with a normal pliers-type action i.e. the axes of rotation 50 of the rollers 49 will be moved together but remain parallel.

Using this tool N, the unextended outer sheath part 15 would be received within cavity 11 between the rollers 49, with the handle grips H moved well apart.

Once the outer sheath part 11 is in position, the handle grips H are moved together and thus the outer sheath part 15 becomes compressed between the roller engaging contours 51 of the rollers 49.

The pipe may be moved longitudinally relative to the rollers 49, or the the tool 10 may be moved longitudinally of the pipe, to cause said extension of the outer sheath part 15 as described above.

Preferably a range of sizes of roller 49 would be provided for each tool 10 so that the tool 10 can be used with a wide variety of sheathed pipe sizes.

It will be noted that a convex rim 49' on one roller 49 engages a concave groove 49" of the other roller 49 when the handle grips H are moved sufficiently together, this creates a positive alignment between the rollers 49 so that the distance between the axes of rotation 50 of the pairs of rollers 49 is maintained constant whilst the tool 10 is in use.

Although the tool 10 described with reference to Figure 8 is a hand tool, if desired, a bench mounted tool such as that shown at 10' in Figure 9 may be used.

The tool comprises a base 60 having apertures 61 to enable the base 60 to be attached to the bench for example, by screws or bolts (not shown).

Upstanding from and welded rigidly to the base 60 are a pair of side walls 62, the side walls 62 having therebetween openings through which the sheathed pipe may be fed.

Mounted between the side walls 62 are two pairs of rollers 65 and 66, the pairs of rollers 65 and 66 being similar in construction to the rollers 49 described with reference to Figure 8, i.e. the rollers of the pair 65 each have a concave shaped groove 67 in the rim thereof whereas the pairs of rollers 66 each have a convex shaped rim 68 to enable positive alignment between the rollers 65 and the rollers 66, and constant maintenance of space between the rotational axes thereof.

The rollers 65 and 66 are mounted in U-shaped roller holders similar to those shown in Figure 8, each having a base 46' and upstanding walls 48' and one roller holder 70 can be moved towards the other roller holder 71 by means of a lever 72 mounted between the side walls 62 which acts through a resiliently biased urging plate 73 urged via spring 74 away from the lever 72.

Thus as downward pressure is applied to lever 72, the roller holder 70 is moved downwardly with a force never greater than that imposed by the spring 74.

Any excess pressure will merely result in compression of the spring 74 and direct pressure will not be applied from the lever 72 to the roller holder 70.

In this embodiment, again a variety of sizes of pairs of rollers 65 and 66 may be provided so that different sized sheathed pipes may be produced and in this event, it may be simpler for the U-shaped roller holders 70 and 71 to be replaced as a unit, rather than replacing individual rollers 65, 66 as is the case with the hand tool shown in Figure 8.

**0113336**

In a modification of the method described above, the inner pipe part 16 may be pre-sheathed with outer sheath part material reduced to its final desired diameter. In this case, a length is cut from such stock material to the desired final length of the brake pipe. The outer sheath part is then stripped from end portions to enable connection parts as described above to be fastened thereto. As a result there is a gap between each connection part and the outer sheath part. Rubber sleeves are again fitted as described above and rolled over the connection parts to bridge the unsheathed end portions of the inner pipe part. If desired, prior to covering with the rubber sleeves, a suitable corrosion resistant material may be applied around the unsheathed end portions manually, for example an appropriate grease or other mouldable material may be used which is held in place, in service, by the rubber sleeves.

CLAIMS.

1.      A method of making a sheathed pipe comprising the steps of, taking an inner pipe part (12) having an outer sheath part (15) thereon, with an end portion (16) of the inner pipe part (12) projecting longitudinally beyond the end (15a) of the sheath part (15), forming a connection part (17) on said end portion (16) of the inner pipe part (12) and providing a sleeve (25) extending over the end (15a) of the outer sheath part (15) and the connection part (17).

2.      A method according to Claim 1 including the steps of cutting a pre-sheathed length of stock sheathed pipe to a desired length, removing the outer sheath part (15) over an end portion (16) of said length to expose said end portion (16) of the inner pipe part (12).

3.      A method according to Claim 1 including the steps of cutting an unsheathed length of stock inner pipe part (12) to a desired length, providing said connection part (17) at one end of said length, applying an outer sheath part (15), shorter than said length of inner pipe part (12), to a portion of said inner pipe part spaced from said end portion (16), squeezing the outer sheath part (15) against the inner pipe part (12) and advancing the position of application of squeeze longitudinally of the inner pipe part (12) towards said end portion (16) to cause said outer sheath part (15) to be extended to provide said sheath part (15) up to or adjacent the connection part (17).

4.      A method according to Claim 3 wherein a spacer (W) is provided between said end (15a) of the outer sheath part (15) and the connection part (17), the spacer (W) being received on said end portion (16) of the inner pipe part (12), prior to providing said connection part (17) and prior to squeezing the outer sheath part (15) so that said end (15a) of the outer sheath part (15) after squeezing, abuts or lies closely adjacent the spacer (W). which in turn abuts or lies closely adjacent the connection part (17).

5.      A method according to Claim 3 or Claim 4 wherein the outer sheath part (15) is squeezed with a squeezing tool comprising at least one pair of rollers between which the pipe is fed, the maximum distance between the pipe engaging parts of the rollers approximating to the final outer size required of the sheathed pipe.

6.  A method according to any one of the preceding claims wherein the pipe is provided with a second connection part (13) on an opposite end portion of the inner pipe part (12), and the method includes the further step of providing a second sleeve (25) extending over the opposite end (15b) of the outer sheath part (15) and the connection part (13) on said opposite end portion.

7.  A method according to any one of the preceding Claims wherein the inner pipe part (12) comprises a metal pipe and the outer sheath part (15) is made of composite construction comprising an inner lining and an outer synthetic plastics material, with mastic material disposed therebetween.

8.  A method according to Claim 7 wherein the internal lining comprises a perforated material.

9.  A sheathed pipe made according to the method of any one of the preceding claims.

10. A method of making a hydraulic brake pipe comprising performing a method according to any one of Claims 1 to 8.

FIG 1

FIG 2

0113336

FIG 3

FIG 4

FIG 7

FIG 6

FIG 5

FIG 8

4/5

0113336

FIG 9

0113336

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 452 728  (E.C. CARLING) * figure 1 * | 1 | F 16 L   33/00 B 29 C   27/24 |
| X | FR-A-1 453 755  (AEROQUIP A.G.) * figure 4 * | 1 | |
| A | US-A-3 965 909  (WADDELL et al.) * figures 3,6 * | 2,3,5, 7,9 | |
| A | DE-B-1 169 733 (S.N.T.F.-ELECTROFORGE) * figures 1,2 * | 8-10 | |
| A | FR-A-1 573 287  (COMPAGNIE DE SAINT-GOBAIN) | | **TECHNICAL FIELDS SEARCHED (Int. Cl. 3)** |
| A | US-A-3 558 391  (J.F. PEYTON et al.) | | F 16 L B 29 C |
| A | US-A-2 638 361  (W.A. MELSOM) | | |

-----

The present search report has been drawn up for all claims

| Place of search | Date of completion of the search | Examiner |
|---|---|---|
| THE HAGUE | 24-02-1984 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82